# EUROPEAN PATENT SPECIFICATION

(11) **EP 1 513 703 B1**
(45) Date of publication and mention of the grant of the patent: **25.10.2006**
(21) Application number: 03733754.0
(22) Date of filing: 17.06.2003
(51) Int. Cl.: B60N 3/04

(54) **MAT**
MATTE
PAILLASSON

(30) Priority: 17.06.2002 SE 0201834
(43) Date of publication of application: 16.03.2005
(73) Proprietor: Döhmers, Bengt, 135 51 Tyresö (SE); Döhmers, Jelena, 135 51 Tyresö (SE)
(72) Inventor: Döhmers, Bengt, 135 51 Tyresö (SE); Döhmers, Jelena, 135 51 Tyresö (SE)
(74) Representative: Eriksson, Kjell
(86) International application number: PCT/SE2003/001020
(87) International publication number: WO 2003/106217

(56) References cited:
- EP-A1- 0 379 630
- WO-A1-00/51841
- DE-U1- 29 918 985
- GB-A- 2 343 842
- US-A- 3 665 543

## Description

### Technical Field of the Invention

The present invention relates to a mat, especially a car mat or a door mat.

### Prior Art

It is previously known car mats that are intended to be located ahead of the seats of a car, said mats being intended to receive dirt, water, snow and the like that loosen from the shoes of the driver/the passengers. The mats are loose and may be taken out for cleaning. The mats usually consist of rubber/plastic and sometimes they are equipped with an upper textile layer to imitate the interior fitting of the car adjacent the car mats. Also the car mats that are equipped with a textile layer may be taken out for cleaning.

It is also previously known door mats that normally has a substrate/bottom side of rubber/plastic and a textile layer on top of the substrate, said textile layer may be of a needle-felt type. Such door mats also need to be cleaned at regular intervals since they receive quite a lot of dirt, water and snow when entering persons wipe off their shoes on these door mats.

A mat comprising a number of absorbant layers is disclosed in document GB-A-2 343 842.

### Objects and Features of the Invention

A primary object of the present invention is to present a mat for the above defined purpose, said mat, without cleaning, may upon desire be brought to expose an un-used surface layer.

Still an object of the present invention is that the handling of the mat should be extremely user-friendly.

A further object of the present invention is that it should have a good ability to absorb moisture and retain dirt.

At least the primary object of the present invention is realised by means of a mat that has being given the features of the appending independent claim 1. Preferred embodiments of the invention are defined in the dependent claims.

### Brief Description of the Drawings

Below an embodiment of the invention will be described, reference being made to the accompanying drawings, where:
- Figure 1: shows a perspective view of a car mat according to the present invention;
- Figure 2: shows a detail of a corner of the car mat, the top layer of the car mat being elevated in the area of the corner; and
- Figure 3: shows a section through a portion of a layer of the car mat.

### Detailed Description of a Preferred Embodiment of the Invention

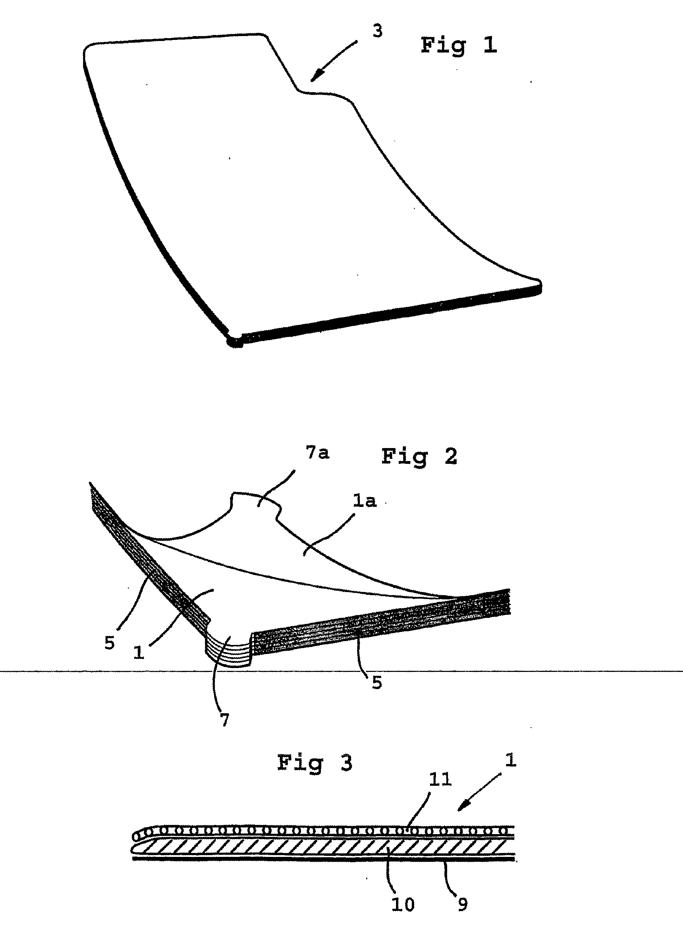

The car mat according to the present invention, shown in figures 1-3, comprises a number of layers 1, a portion of a layer 1 being shown in section in figure 3. Normally, the car mat according to the present invention comprises 5-15 layers that are arranged on top of each other.

As is evident from figure 1 the car mat according to the present invention has an external contour that is adapted to the space, in which the car mat is to be placed. In the shown embodiment a corner of the car mat has a cut away portion 3. The contour of the car mat according to the present invention may of course vary depending on the shape of the space in question, which varies for different car models.

In figure 2 a corner of a car mat according to the present invention is shown in detail and it is evident from figure 2 that the car mat according to the present invention consists of a number of layers 1. The layers 1 that constitute the car mat according to the present invention are mutually connected by glue barriers 5 applied at the edge portions of the car mat, said glue barriers 5 extending in principle along all edge portions of the car mat according to the present invention. In figure 1 the glue barriers 5 are indicated by means of grey zones. In the corner portion shown in figure 2 each layer 1 is equipped with a projecting tab 7 that constitutes as grip means when a worn out layer 1 is to be removed. In figure 2 this has been indicated by elevating the top layer 1a in the area of the corner. When the top layer is removed it will loosen from the edge portions of the car mat along in principle the entire circumference of the car mat. As is evident from figure 2 the glue barriers 5 are not applied in the areas of the tabs 7. The reason therefore is that the tabs 7 should be free in order to make it easy for the operator to grab the tab 7a.

Generally, the glue barriers 5 are provided to hold the layers 1 together to create a car mat that is relatively compact in height. Further, the function of the glue barriers 5 is to prevent moisture and a dirt to enter between the individual layers 1 that the car mat according to the present invention constitutes of. The glue barriers 5 are principally like the glue barriers that are provided on for instance glued note pads. However, in certain aspects higher demands are made upon the glue barriers 5 according to the present invention since they must prevent entering of for instance moisture and dirt. Of course corresponding demands are not present as regards the glue barriers of glued note pads.

In figure 3 the structure of a layer 1 is schematically shown, a car mat according to the present invention being constituted by a number of such layers 1, see figure 2. As is evident from figure 3 layer 1 comprises at the bottom a barrier sheet 9 that normally is made of rubber or plastic. The barrier sheet 9 should be impermeable to moisture. The barrier sheet 9 should also have a certain inherent stiffness/stability to serve as a substrate of the layer 1.

On top of the barrier sheet 9 an absorbing sub-layer 10 is provided, said sub-layer 10 having an ability to absorb and retain liquid/moisture. Generally, the absorbing sub-layer 10 may be compared to a corresponding layer in a sanitary towel of compact dimensions.

A net 11 is provided on top of the absorbing sub-layer, said net being relatively fine-meshed to prevent that gravel, sand the like from the shoes of the driver/passengers should contact the absorbing sub-layer 10. Thus, the aim is to make gravel, sand and the like to stay on top of the net 11. If needed, these particles may be removed by taking the car mat out of the car and for instance shake the car mat.

As regards the cooperation between the different sublayers the barrier sheet 9 and the absorbing sub-layer 10 are preferably mutually connected by glueing. This guarantees that the absorbing sub-layer 10 is not displaced relative to the barrier sheet 9 when the user braces his feet against the car mat. The net 11 is preferably attached to the barrier sheet 9 along the edges of the car mat. On the contrary the net 11 may rest loosely against the absorbing sub-layer 10.

A car mat according to the present invention functions in the following way. A car mat that consists of several layers 1, see figure 1, is placed at an intended location in a car, said car mat functioning as a car mat according to prior art. In this connection it should be pointed out that a car mat according to the present invention should be designed in such a way that the tabs 7 are facing outwards, i.e. they are located adjacent the entrance of the vehicle. When the user determines that the top layer is worn out, e.g. that the absorbing sub-layer 10 is saturated by moisture and/or that the net 11 has damages, the user may in a simple way remove the top layer 1. In connection therewith the user grabs the tab 7a and pulls the top layer 1a upwards, see figure 2, whereby the edges of the top layer 1a will loosen from the rest of the car mat. When the top layer 1a is completely loosened from the rest of the car mat the top layer 1a is thrown away at a suitable place. Preferably, each layer 1 constitutes solely of material that may be recycled.

When loosening the top layer 1a it is also feasible that a roll is made of said layer 1a, the benefit being that the material that is located on top of the net 11 is not falling off the net in connection with the loosening.

When the top layer 1a has been removed the car mat according to the present invention will expose an un-used top layer 1a and the car mat is again ready for use.

When all the layers of the car mat according to the present invention has been removed the car mat according to the present invention is consumed and a new car mat according to the present invention preferably comes into use.

### Feasible Modifications of the Invention

In the embodiment described above the net 11 is not connected to the absorbing sub-layer 10. However, within the scope of the present invention it is also feasible that the net 11 and the absorbing sub-layer 10 are mutually connected and that the absorbing sub-layer 10 is not connected to the barrier sheet 9. However, also in this case the net 11 must be connected to the barrier sheet 9 along the edges of the car mat.

The embodiment described above relates to a car mat. However, a door mat may principally be designed in the same way. However, in such a case the net should be especially wear resistant or if the net is missing the absorbing sub-layer must be especially wear resistant. The reason therefore is that when using a door mat one wipes off the shoes by scrubbing these against the door mat a number of times.

## Claims

1. Mat, especially a car mat or a door mat, said mat comprising a number of layers (1, 1a) where each layer (1, 1a) comprising an absorbing sub-layer (10), and that the layers (1, 1a) are mutually connected along the edges of the mat, **characterized in that** each layer (1, 1a) comprises a barrier sheet (9) provided below the absorbing sub-layer (10), and that each layer (1, 1a) comprises a net (11) provided on top of the absorbing sub-layer (10).

2. Mat according to claim 1, **characterized in that** the net (11) is connected to the barrier sheet (9) along its edges.

3. Mat according to any of the previous claims, **characterized in that** the layers (1, 1a) are mutually connected by means of a glue barrier (5).

4. Mat according to claim 3, **characterized in that** the glue barrier (5) constitutes a moisture barrier.

5. Mat according to any of the previous claims, **characterized in that** each layer (1; 1a) has a tab (7, 7a) in the area of a corner.

6. Mat according to any of the previous claims, **characterized in that** in each layer (1, 1a) the barrier sheet (9) and the absorbing sub-layer (10) are mutually connected by glueing.

## Patentansprüche

1. Matte, insbesondere Automatte oder Türmatte, wobei die Matte eine Anzahl von Schichten (1, 1a) umfaßt, wobei jede Schicht (1, 1a) eine absorbierende Unterschicht (10) aufweist und die Schichten (1, 1a) entlang der Kanten der Matte miteinander verbunden sind, **dadurch gekennzeichnet, daß** jede Schicht (1, 1a) eine Barriereschicht (9) umfaßt, die unterhalb der absorbierenden Unterschicht (10) vorgesehen ist, und daß jede Schicht (1, 1a) ein Netz (11) umfaßt, welches auf der absorbierenden Unterschicht (10) vorgesehen ist.

2. Matte nach Anspruch 1, **dadurch gekennzeichnet, daß** das Netz (11) entlang seiner Kanten mit der Barriereschicht (9) verbunden ist.

3. Matte nach einem der vorangegangenen Ansprüche, **dadurch gekennzeichnet, daß** die Schichten (1, 1a) mittels einer Leimbarriere (5) miteinander verbunden sind.

4. Matte nach Anspruch 3, **dadurch gekennzeichnet, daß** die Leimbarriere (5) eine Feuchtigkeitsbarriere darstellt.

5. Matte nach einem der vorangegangenen Ansprüche, **dadurch gekennzeichnet, daß** jede Schicht (1, 1a) im Bereich einer Ecke eine Lasche (7, 7a) aufweist.

6. Matte nach einem der vorangegangenen Ansprüche, **dadurch gekennzeichnet, daß** in jeder Schicht (1, 1a) die Barriereschicht (9) und die absorbierende Unterschicht (10) durch Kleben miteinander verbunden sind.

## Revendications

1. Tapis, et spécifiquement tapis de voiture ou d'accueil, ledit tapis comprenant un certain nombre de couches (1, 1a), chaque couche (1, 1a) comprenant une sous-couche absorbante (10), et les couches (1, 1a) étant raccordées mutuellement le long des bords du tapis, **caractérisé en ce que** chaque couche (1, 1a) comprend une feuille barrière (9) disposée sous la sous-couche absorbante (10), et **en ce que** chaque couche (1, 1a) comprend un filet (11) disposé sur le dessus de la sous-couche absorbante (10).

2. Tapis selon la revendication 1, **caractérisé en ce que** le filet (11) est raccordé à la feuille barrière (9) le long de ses bords.

3. Tapis selon l'une quelconque des revendications précédentes, **caractérisé en ce que** les couches (1, 1a) sont raccordées mutuellement au moyen d'une couche de colle (5).

4. Tapis selon la revendication 3, **caractérisé en ce que** la couche de colle (5) constitue une barrière contre l'humidité.

5. Tapis selon l'une quelconque des revendications précédentes, **caractérisé en ce que** chaque couche (1, 1a) a une languette (7, 7a) dans la zone d'un coin.

6. Tapis selon l'une quelconque des revendications précédentes, **caractérisé en ce que** dans chaque couche (1, 1a), la feuille barrière (9) et la sous-couche absorbante (10) sont raccordées mutuellement par un encollage.
